Europäisches Patentamt

European Patent Office

Office européen des brevets

(11) Publication number: **0 319 299 B1**

# EUROPEAN PATENT SPECIFICATION

(45) Date of publication of patent specification: **17.06.92** (51) Int. Cl.5: **F01N 3/28**, F01N 3/02

(21) Application number: **88311395.3**

(22) Date of filing: **01.12.88**

(54) **Catalytic converter, particulate filter for exhaust systems.**

(30) Priority: **04.12.87 US 128792**

(43) Date of publication of application:
**07.06.89 Bulletin 89/23**

(45) Publication of the grant of the patent:
**17.06.92 Bulletin 92/25**

(84) Designated Contracting States:
**DE FR GB IT SE**

(56) References cited:
**DE-B- 2 213 540**
**DE-U- 8 019 813**
**US-A- 4 148 120**
**US-A- 4 305 992**

(73) Proprietor: **MINNESOTA MINING AND MANU-**
**FACTURING COMPANY**
**3M Center, P.O. Box 33427**
**St. Paul, Minnesota 55133-3427(US)**

(72) Inventor: **Merry, Richard P. c/o Minnesota**
**Mining and**
**Manufacturing Company 2501 Hudson Road**
**St. Paul Minnesota 55144-1000(US)**

(74) Representative: **Baillie, Iain Cameron et al**
**c/o Ladas & Parry, Altheimer Eck 2**
**W-8000 München 2(DE)**

**Description**

BACKGROUND OF THE INVENTION

The present invention relates to a catalytic converter or particulate filter for use in an exhaust system wherein a catalytic converter or filter of the type having a metallic casing with a monolithic element is securely mounted within the casing by a flexible metal-reinforced intumescent mounting composite. The metal-reinforced intumescent mounting composite is particularly useful as packing material for mounting fragile ceramic monoliths of diesel particulate filters.

Catalytic converters are universally employed for oxidation of carbon monoxide and hydrocarbons and reduction of the oxides of nitrogen in automobile exhaust gases in order to control atmospheric pollution. Due to the relatively high temperatures encountered in these catalytic processes, ceramics have been the natural choice for catalyst supports. Particularly useful supports are provided by ceramic honeycomb structures as described, for example, in U.S. Patent No. RE 27,747.

Ceramic bodies tend to be frangible and have coefficients of thermal expansion differing markedly from the metal, usually stainless steel, containers. Thus, the mounting means of the ceramic body in the container must provide resistance to mechanical shock resulting from impact and vibration. Intumescent sheet materials that have been found useful as mounting materials for this purpose are described in U.S. Patent Nos. 3,916,057, 4,305,992 and 4,617,176 and U.K. Patent 1,513,808.

Catalytic converters employing intumescent sheet materials as described in the aforementioned patents use a sheet or mat of generally rectangular shape that is wrapped around the lateral surface of the monolith. A disadvantage of these materials is that they can exert tremendous pressures on the ceramic monoliths of the catalytic converters. These pressures, combined with the axial expansion of the shell, the coefficient of friction, shear modulus, and coefficient of thermal expansion of the intumescent sheet, may cause cracks within the ceramic monolith. These cracks are termed "ring-off cracks" and are circumferential cracks usually occurring at midlength of the monolith. In severe cases, the ceramic monolith is completely severed into two pieces. Such materials also exert very little force until the sheet material reaches a temperature in the range of 250 to 375 C at which time the sheet intumesces. Vibration of the converter prior to mat expansion can cause movement and subsequent damage to the ceramic monolith.

In constructing a catalytic converter with the presently available materials, a minimum mount density of 0.6 g/cm$^3$ of intumescent sheet materials is required to hold the ceramic monolith in place during normal operating conditions. However, due to the dimensional tolerances of the ceramic monolith, the metal casing, and the intumescent sheet materials, mount densities can frequently be 2 to 2.5 times the minimum mount density. Under these high mount density conditions, and at increased operating temperatures, ring-off cracking of the ceramic monolith can occur with high regularity. If the ceramic monolith is inherently weak, as in the case of a diesel particulate filter, ring-off cracks can occur at mount densities even lower than that used to mount the stronger, conventional ceramic catalytic substrates. Ring-off cracking in a diesel particulate filter renders the filter useless. However, if the mount density is reduced to eliminate ring-off cracking, the support of the ceramic monolith or the ceramic particulate filter may then be inadequate and catastrophic damage can result from the effects of vibration and thermal shock. Thus, it is clear that there is a need for an improved intumescent mounting material.

Attempts have been made to reduce or eliminate ring-off cracking of ceramic monoliths in the past. U.S. Patent No. 4,617,176 achieved such a result through a catalytic converter mounted with a flexible, intumescent sheet having generally sinusoidal edges. However, thermal insulation would not be provided around the entire lateral surface of the monolith which may allow more of the heat from the exhaust system to radiate to surrounding surfaces.

Catalytic converters have also been supported by wire mesh mounting materials which provide good initial holding force but lose their holding force as temperatures reach 600 C and higher. In addition, the wire mesh provides no seal to prevent exhaust gases from flowing through it and bypassing the catalytic element. It also provides no thermal insulation. This latter fact creates large thermal gradients and associated thermal stresses in the monolith. These thermal stresses can produce the same type of ring-off cracks as those formed when using intumescent mounting sheets. An attempt to solve these problems was put forth in U.S. Patent No. 4,269,807 where a high temperature intumescent caulk was positioned within the wire mesh blanket. However, such material is difficult and time consuming to apply and, at high temperatures, produces the same expansion force characteristics of catalytic converters using only intumescent mounting materials.

German Gebrauchsmuster Gm 8019813 discloses intumescent mounting materials (swelling mat) to be used in automobile exhaust systems. It addresses the problem of mounting materials losing their sealing capabilities by "washing out". This washing out occurs due to gases flowing into the swelling mat. The Gm remedies the destruction of the mat by inserting a corrugated wire mesh into the swelling mat. There is no teaching of any method of inserting the wire mesh into the swelling mat nor is there any recognition of the need to prevent a high bulk modulus at high temperatures or the requirement of sufficient bulk modulus at low temperatures to firmly support a ceramic monolith. The Gm does not address the problems of ring off cracking and of vibrational damage.

## SUMMARY OF THE INVENTION

The present invention provides a catalytic converter and a diesel particulate filter with a flexible, metal-reinforced intumescent mounting composite which exerts a low temperature (ambient temperature or less) volume stress of at least 20 kPa and a high temperature (750 C) volume stress of less than 500 kPa. The mounting composite is prepared by pouring a slurry of ceramic fibers, unexpanded vermiculite and latex binder around and enclosing a resilient metal sheet, perforated metal sheet, metal screen, metal cloth or metal mesh and subsequently drying the slurry. The metal sheets, screens, cloths or meshes are corrugated, crimped, zigzagged or otherwise formed into a resilient three-dimensional structure. The density of the slurry is controlled such that the dried, finished composite has a bulk modulus of no less than 20 kPa and no greater than 500 kPa over the temperature range of -40 C to 750 C.

## DESCRIPTION OF THE DRAWING

FIG. 1 is a perspective view of the shell of a catalytic converter of the present invention shown in disassembled relation;

FIG. 2 is a schematic view of the catalytic converter of FIG. 1, the three-dimensional sinusoidal pattern not being shown for the sake of simplicity;

FIG. 3 is a schematic end view of the flexible, metal-reinforced intumescent mounting composite; and

FIG. 4 is a graph illustrating a comparison of pressure (volume stress) applied to a ceramic monolith by the metal-reinforced mounting composite of this invention and mounting mats of the prior art.

## DETAILED DESCRIPTION OF THE INVENTION

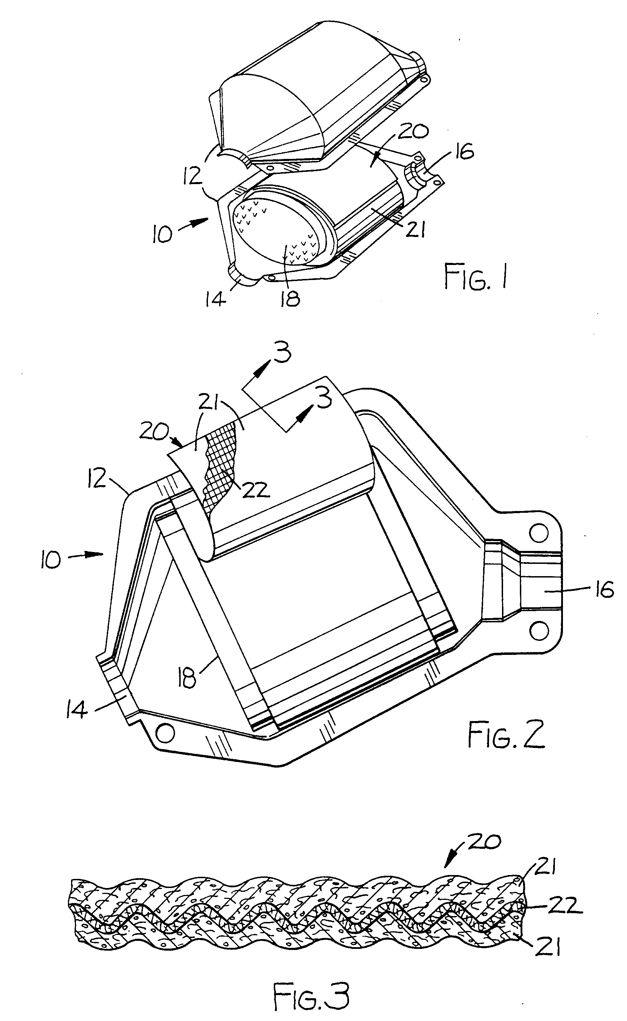

Referring to Figures 1 and 2, a catalytic converter 10 is shown with a metallic casing 12 having generally frusto-conical inlet and outlet ends 14 and 16, respectively. Disposed within the casing 12 is a monolithic catalytic element 18 formed of a refractory material such as ceramic with gas flow channels contained therein (not shown). Surrounding the catalytic element 18 is a metal-reinforced, intumescent, mounting composite 20 which supports the catalytic element 18 within the casing 12. At both ambient temperature and operating temperature, the mounting composite 20 holds the catalytic element 18 in place in the casing 12 and seals the peripheral edges of the catalytic element 18 to thus prevent exhaust gases from bypassing catalytic element 18.

Mounting composite 20 comprises an intumescent material formed about a resilient metal reinforcement such as a metal sheet, metal cloth, metal screen or a metal mesh. The resilient metal reinforcement is typically formed of an alloy such as stainless steel, inconel steel, galvanized steel or other metal containing alloys.

During operation of the catalytic converter 10, the temperature of the assembly increases and the radial gap between the casing 12 and the ceramic element 18 increases due to the high thermal expansion coefficient of the casing 12. Expansion of the mounting composite 20 and its thermal stability and resilience compensate for the difference in thermal expansion of the casing 12 and the catalytic element 18 and also protect against vibration of the fragile device. The mounting composite 20 also compensates for irregularities in the metallic or ceramic surfaces.

The metal-reinforced mounting composite 20 may be formed by standard paper making techniques. From 40 to 65% by weight of treated or untreated flakes of unexpanded vermiculite having particle sizes ranging from about 0.1 mm up to 6 mm, preferably between 1 mm and 2 mm, are combined in a large volume of water with solids in the proportions 25 to 50% inorganic fibrous materials and 5 to 15% of binder. By "treated vermiculite" is meant unexpanded vermiculite ore which has been substantially or completely ion exchanged with $NH^+$ cations by treating the vermiculite with ammonium dyhydrogen phosphate, ammonium carbonate, ammonium chloride, ammonium hydroxide or other suitable ammonium compound. The inorganic fibrous materials may comprise alumina-silicate fibers (available commercially under the tradename Fiberfax, Cerafiber and Kaowool), chrysotile or amphibole asbestos, soft glass fibers as available under the tradename Chopped E-glass, refractory filaments including zirconia-silica fibers and crystalline alumina whiskers. Suitable binder for the ceramic monolith mounting composite of this invention can include various polymers and elastomers in latex form, as for example, natural rubber latices, styrene butadiene latices, butadiene acrylonitrile latices, latices of acrylate or methacrylate polymers, copolymers and the like. Inorganic binders can include bentonite or colloidal silica. Organic and inorganic binders may be used in combination to produce sheet materials according to the present invention. Small amounts of surfactants, foaming agents and flocculating agents may also be added before forming the sheet. The above slurry is then introduced around and enclosing a reinforcing material made of stainless steel, inconel, steel, galvanized steel or other suitable metal or metal alloy.

The reinforcing material can be in the form of a sheet, perforated sheet, cloth, screen or mesh. The screen or mesh can be woven, knitted or brazed. This reinforcing material should be crimped, corrugated, zigzagged or otherwise put into a three-dimensional shape so as to provide a resilient, springy material. The preferred shape is seen in FIG. 3 which shows a three dimensional sinusoidal pattern. The reinforcing resilient material should be chosen so that when combined with the slurry and dried, the resulting composite material has a bulk modulus of at least 20 kPa and less than 500 kPa throughout the temperature range of -40 C to 750 C.

One such reinforcing material 22 is a knitted wire mesh made of wire having a diameter of .127 to .762 mm, preferably .280 mm, with knitted opening size corresponding to a density of 48 to 100. This density number relates to the spacing of the needles on the knitting machine and is well known in the industry. The wire mesh also has a #12 crimp corresponding to about 1.2 corrugations per centimeter, each corrugation having an amplitude of about 0.64 centimeter. The correct amplitude of the corrugation is critical to achieve the results given in the present invention. The resiliency of the mounting composite is a direct function of the amplitude and spring constant of the reinforcing material. It was found that by providing the knitted wire mesh reinforcing material 22, ring off cracking at high temperatures could be prevented while providing sufficient holding force for the ceramic monolith at low temperatures. Of course, frequency, shape of corrugation and reinforcement type can be varied without departing from the scope of the invention.

Flocculation of the slurry is conveniently achieved using an electrolyte such as alum, alkali or acid. The expanded vermiculite, inorganic fibrous material and organic latex binder are blended together in a volume of water of about 5 to 100 times as much by weight and the flocculating agent or agents are added. A small amount of surfactant or foaming agent may also be employed in order to improve the dispersion of the intumescent material.

A sheet of composite material is conveniently formed by standard paper-making techniques either in a handsheet former or a Fourdrinier screen. The slurry is preferably introduced such that it penetrates and completely surrounds the reinforcing material 22 and is dried to form material 21. However, it may also be introduced on either side of or as a shell around the reinforcing material. The resulting green sheet is dewatered and dried at about 90 C to form a handleable, flexible, resilient intumescent ceramic monolith mounting composite sheet material.

The usefulness of the metal-reinforced intumescent mounting composite of the present invention is demonstrated by its ability to generate and maintain sufficient force between the casing and the substrate in order to hold the catalytic ceramic monolith or ceramic diesel particulate filter in the casing over a wide temperature range. This unique holding force is possible despite dimensional changes resulting from differential thermal expansion of the ceramic monolith and metal container. The holding force also responds well at high temperatures and does not generate too much force to subject the ceramic monolith to volume stresses resulting in fractures.

The following detailed description and tests performed will more fully illustrate the benefits of this invention.

Water (1200 ml) was poured into a mixing chamber of a large Waring blender and 26 g of alumina-silica fiber (Cerafiber available from Johns-Mansville) was added followed by vigorous agitation for about 15 seconds. The fiber slurry was transferred to a 4 liter beaker and mixed with an air propelled blade. 11 g of Rohm and Haas HA-8 acrylic binder and 43.2 g #4 vermiculite ore (W. R. Grace Co.) were added to the fiber slurry. While mixing, 21.09 g of dilute papermaker's alum (25% solution of aluminum sulfate) and 1.2 g of sodium aluminate were added to the slurry to precipitate the latex binder throughout the other components. The mixture was agitated vigorously and quickly poured onto a handsheet screen on top of which was fixed a piece of knitted wire reinforcement (0.28 mm dia wire, 48 density, #12 crimp stainless steel obtained from Metex Corp.) which was previously degreased in trichloroethylene. The drain was then triggered to dewater the sheet. The composite was then dried on a Williams Apparatus Co. sheet drier.

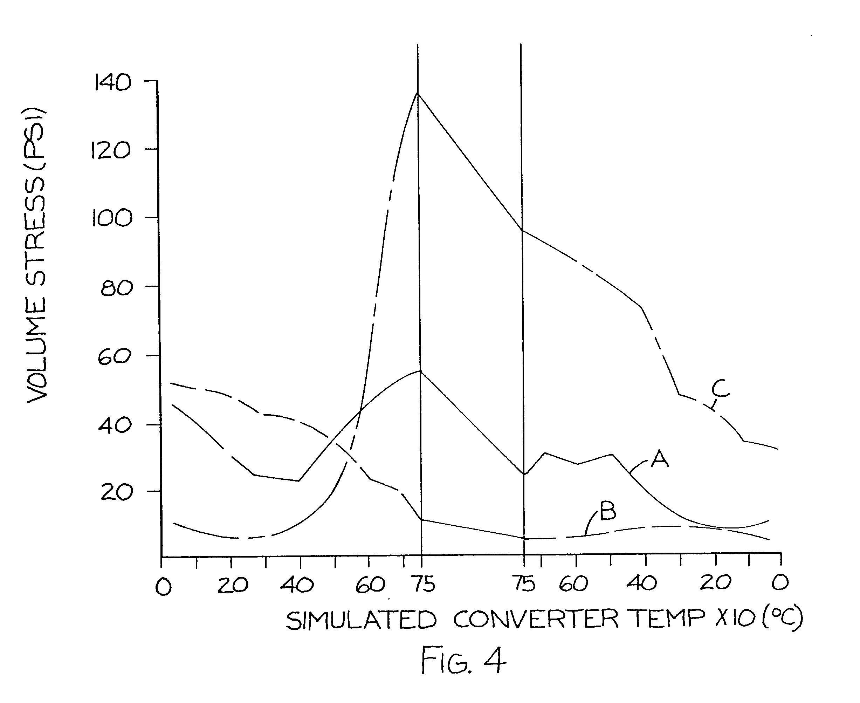

Reinforced mounting composites prepared as above, but with varying mount densities, were compared with a conventional intumescent mat (Interam Brand Series IV from 3M Company) and also with the knitted stainless steel mesh alone in an apparatus designed to measure pressure (volume stress) exerted by mounting supports. The apparatus consisted of two stainless steel anvils containing cartridge heaters so that temperatures found in actual catalytic converters could be simulated. The gap or distance between the anvils was set at real converter conditions and the gap increased with rising temperature just as it would in an actual catalytic converter including a five-hour soak, shown in the break area of the graph in FIG. 4. FIG. 4 shows volume stress curves that were generated in this way for the conventional mat C, a knitted wire mesh B and the metal-reinforced intumescent mounting composite A of this invention. (Values are shown in psi.) The conventional mat had poor initial holding force and a high peak force as it expanded. If the conventional mat was compressed more initially to improve the cold holding force, the resulting pressure at high temperature would exceed the strength of the monolith thereby resulting in fracture. The wire mesh alone had good cold holding force but this deteriorated rapidly as the converter was heated. The catalytic converter with the metal-reinforced intumescent mounting composite of the present invention combined a good cold holding force with a lower volume stress peak at high temperature.

A test to determine how securely the ceramic monolith was held in place in the catalytic converter was conducted by measuring the force required to move the monolith after it had been assembled in the metal housing. The test consisted of mounting a cylindrical ceramic monolith (11.84 cm dia x 15.24 cm long) inside of a metal canister (12.34 cm I.D.). The canister was 2.54 cm longer than the monolith to give the monolith room to move when it was pushed. The force required to move the monolith relative to the canister was measured and thus indicated how tightly the monolith was being held by the mounting material. The force was applied and measured on an MTS tensile tester (MTS Systems Corp.). The maximum push out force is shown in Table 1.

TABLE 1

| Mounting Material | Mount Density (g/cm$^3$) | PUSH OUT FORCE AT | | |
|---|---|---|---|---|
| | | Room Temp. (Newtons) | 300 C (Newtons) | 600 C (Newtons) |
| Reinforced Mounting Composite | 0.77 | 1844 | 1290 | 8840 |
| | 0.96 | 3032 | 1209 | 15720 |
| | 1.60 | 9082 | 5283 | >23100 |
| Conventional Mat | 0.72 | 239 | 86 | 9560 |
| | 0.80 | 475 | 110 | 15060 |
| | 0.88 | 2008 | 916 | >22960 |
| | 0.96 | 2652 | 1404 | >23020 |
| | 1.04 | 3077 | 1475 | >23150 |
| Knitted Wire Mesh | Not Applicable | 823 | 1056 | 410 |
| | | 4047 | -- | 2449 |

It will be observed that the metal-reinforced intumescent mounting composite of the present invention avoids extremely low or extremely high push out forces over a much broader mount density range. This is very important in view of the very large monolith tolerances (± 2 mm) typical in catalytic converters resulting in large mount density variations.

Mounting materials were tested on an exhaust gas simulator (made by RPS Engineering) to determine their ability to prevent ring-off cracking of ceramic catalytic elements mounted in metallic canisters. The metallic canisters were made of 409 stainless steel with an I.D. of 12.34 cm and the ceramic element was a standard ceramic monolith 11.84 cm diameter by 15.24 cm long, 62 cells per square centimeter. The ceramic substrates were wrapped with various mounting materials and connected to the exhaust gas simulator. The exhaust gas simulator, using propane fuel, was run at an inlet gas temperature of 954 C and 23 SCFM. After 10 minutes at 954 C the propane was shut off and room air introduced at 72 SCFM. The air flow was continued until the canister temperature dropped to about 38 C. The unit was disassembled and the substrate examined for cracks. Reinforced mounting composites made according to this invention with wire meshes of different amplitudes were compared with conventional mounting mats made and an intumescent paste "mat" made according to the teaching of U.S. Patent No. 4,269,807. The results of such a comparison are shown in Table 2.

EP 0 319 299 B1

TABLE 2

| Mounting Material | Mount Density (g/cm$^3$) | Results |
|---|---|---|
| Knitted wire reinforced composite[a] | 0.93 | No crack |
| | 1.00 | No crack |
| | 1.10 | No crack |
| | 1.20 | No crack |
| | 1.59 | No crack |
| Knitted wire reinforced composite[b] | 1.54 | Cracked |
| Corrugated Hex reinforced composite | 1.38 | No crack |
| Corrugated Wire Cloth reinforced composite | 1.04 | No crack |
| Conventional Mat | 0.80 | Cracked |
| | 0.92 | Cracked |
| | 0.98 | Cracked |
| | 1.36 | Several cracks |
| Paste Mat | -- | Cracked |

[a]Knitted wire, 0.011" (.28 mm) diameter 304SS, 48 density, corrugated 0.250" (.64 cm) amplitude, 1/2" (1.27 mm) wavelength.
[b]Knitted wire, 0.011" (28 mm) diameter 304SS, 48 density, corrugated 0.125" (.32 cm) amplitude, 1/2" (1.27 mm) wavelength.

**Claims**

1. A catalytic converter (10) comprising a metallic casing (12), a ceramic catalytic element (18) disposed within the casing (12), and a flexible mounting means (20) disposed between the catalytic element (18) and the metallic casing (12) for positioning the catalytic element (18) and for absorbing mechanical and thermal shock, said flexible mounting means (20) comprising a composite of intumescent material (21) formed about a resilient reinforcing material (22), said catalytic converter (10) characterized by said composite of intumescent material having a bulk modulus greater than 20 kPa and less than 500 kPa throughout the temperature range of -40 °C to 750 °C.

2. A catalytic converter (10) as described in claim 1 wherein the flexible mounting means (20) comprises from 40% to 65% by weight of unexpanded vermiculite, from 25% to 50% by weight of inorganic fibrous material and from 5% to 15% of binder.

3. A catalytic converter (10) as described in claim 2 wherein said vermiculite has been ion-exchanged with an ammonium compound, and wherein said inorganic fibrous material (21) is asbestos, soft glass fiber, alumina whisker, alumina-silica fiber or zirconia-silica fiber.

4. A catalytic converter (10) as described in claim 2 wherein said binder is an organic or inorganic material or combination thereof.

5. A catalytic converter (10) as described in claim 1 wherein said resilient reinforcing material (22) is a metal sheet, metal cloth, metal screen or metal mesh.

6. A diesel particulate filter (10) comprising a metallic casing (12), a unitary-solid ceramic element (18) disposed within the casing (12), and a flexible mounting means (20) disposed between the ceramic element (18) and the metallic casing (12) for positioning the ceramic element (18) and for absorbing mechanical and thermal shock, said flexible mounting means (20) comprising a composite of intumescent material (21) formed about a resilient reinforcing material (22), said diesel particulate filter (10) characterized by said composite of intumescent material having a bulk modulus greater than 20 kPa and less than 500 kPa throughout the temperature range of -40 C to 750 C.

7. A diesel particulate filter (10) as described in claim 6 wherein the flexible mounting means (20)

6

comprises from 40% to 65% by weight of unexpanded vermiculite, from 25% to 50% by weight of inorganic fibrous material and from 5% to 15% of binder.

8.  A diesel particulate filter (10) as described in claim 7 wherein said vermiculite has been ion-exchanged with an ammonium compound, and wherein said inorganic fibrous material (20) is asbestos, soft glass fiber, alumina whisker, alumina-silica fiber or zirconia-silica fiber.

9.  A diesel particulate filter (10) as described in claim 7 wherein said binder is an organic or inorganic material or combinations thereof.

10. A diesel particulate filter (10) as described in claim 6 wherein said resilient reinforcing material (22) is a metal sheet, metal cloth, metal screen or metal mesh.

**Revendications**

1.  Convertisseur catalytique (10), comprenant un boîtier métallique (12), un élément catalytique céramique (18), disposé à l'intérieur de ce boîtier (12) et des moyens de montage flexibles (20) disposés entre cet élément catalytique (18) et le boîtier métallique (12), de façon à positionner l'élément catalytique (18) et à absorber les chocs mécaniques et thermiques, ces moyens de montage flexibles (20) comprenant un produit composite formé d'une matière intumescente (21) disposée autour d'une matière élastique de renforcement (22), ce convertisseur catalytique (10) étant caractérisé en ce que le produit composite à matière intumescente possède un module de compressibilité en volume qui est supérieur à 20 kPa et inférieur à 500 kPa sur toute l'étendue du domaine de températures compris entre -40 °C et 750 °C.

2.  Convertisseur catalytique (10) suivant la revendication 1, dans lequel les moyens de montage flexibles (20) comprennent de 40 % à 65 % en poids de vermiculite non expansée, de 25 % à 50 % en poids de matière en fibre non organique et de 5 % à 15% de liant.

3.  Convertisseur catalytique (10) suivant la revendication 2, dans lequel la vermiculite a fait l'objet d'un échange d'ions avec un composé d'ammonium et dans lequel la matière en fibre non organique (21) est de l'amiante, de la fibre de verre tendre, de la barbe d'alumine, de la fibre d'alumine-silice ou de la fibre de zircone-silice.

4.  Convertisseur catalytique (10) suivant la revendication 2, dans lequel le liant est une matière organique ou non organique ou une combinaison de telles matières.

5.  Convertisseur catalytique (10) suivant la revendication 1, dans lequel le matériau élastique de renforcement (22) est une feuille métallique, un tissu métallique, un crible métallique ou un tamis métallique.

6.  Filtre à particules (10) pour moteur diesel, comprenant un boîtier métallique (12), un élément céramique plein (18), d'un seul bloc et disposé à l'intérieur de ce boîtier (12), et des moyens de montage flexibles (20) disposés entre cet élément céramique (18) et le boîtier métallique (12) de façon à positionner l'élément céramique (18) et à absorber les chocs mécaniques et thermiques, ces moyens de montage flexibles (20) comprenant un produit composite à matière intumescente (21) mis en forme autour d'un matériau élastique de renforcement (22), ce filtre à particules (10) pour moteur diesel étant caractérisé en ce que le produit composite à matière intumescente possède un module de compressibilité en volume qui est supérieur à 20 kPa et inférieur à 500 kPa sur toute l'étendue du domaine de températures compris entre -40 °C et 750 °C.

7.  Filtre à particules (10) pour moteur diesel suivant la revendication 6, dans lequel les moyens de montage flexibles (20) comprennent de 40 % à 65 % en poids de vermiculite non expansée, de 25 % à 50 % en poids d'une matière en fibre non organique et de 5 % à 15 % de liant.

8.  Filtre à particules (10) pour moteur diesel suivant la revendication 7, dans lequel la vermiculite a fait l'objet d'un échantillon d'ions avec un composé d'ammonium et dans lequel la matière en fibre non organique (20) est de l'amiante, de la fibre de verre tendre, de la barbe d'alumine, de la fibre d'alumine-silice ou de la fibre de zircone-silice.

9. Filtre à particules (10) pour moteur diesel suivant la revendication 7, dans lequel le liant est une matière organique ou non organique ou des combinaisons de telles matières.

10. Filtre à particules (10) pour moteur diesel suivant la revendication 6, dans lequel le matériau élastique de renforcement (22) est une feuille métallique, un tissu métallique, un crible métallique ou un tamis métallique.

**Patentansprüche**

1. Katalysator (10) umfassend ein Metallgehäuse (12), eine keramisches Katalysatorelement (18), welches in dem Gehäuse (12) angeordnet ist, und eine flexible Befestigungseinrichtung (20), welche zwischen dem Katalysatorelement (18) und dem Metallgehäuse (12) angeordnet ist, um das Katalysatorelement (18) zu positionieren, und um mechanische Stöße und Wärmestöße zu absorbieren, wobei die flexible Befestigungseinrichtung (20) eine Mischung aus einem sich aufblähenden Material (21) enthält, welches um ein elastisches Verstärkungsmaterial (22) ausgebildet ist, wobei der Katalysator (10) dadurch gekennzeichnet ist, daß die Mischung aus sich aufblähendem Material einen Kompressionsmodul von mehr als 20 kPa und Weniger als 500 kPa in dem Temperaturbereich von - 40 ° C bis 750 ° C besitzt.

2. Katalysator (10) nach Anspruch 1, dadurch gekennzeichnet, daß die flexible Befestigungseinrichtung (20) 40 bis 65 Gew.-% nichtexpandierten Vermikulit, 25 bis 50 Gew.-% anorganisches Fasermaterial und 5 bis 15 % Bindemittel enthält.

3. Katalysator (10) nach Anspruch 2, dadurch gekennzeichnet, daß der Vermikulit einem Ionenaustausch mit einer Ammoniumverbindung unterzogen wurde, und daß das anorganische Fasermaterial (21) Asbest, Weichglasfaser, Aluminiumoxid-Whisker, Aluminiumoxid-Siliziumdioxid-Faser oder Zirkoniumdioxid-Siliziumdioxid-Faser ist.

4. Katalysator (10) nach Anspruch 2, dadurch gekennzeichnet, daß das Bindemittel ein organisches oder anorganisches Material oder eine Kombination derselben ist.

5. Katalysator (10) nach Anspruch 1, dadurch gekennzeichnet, daß das elastische Verstärkungsmaterial (22) eine Metalltafel, ein Metalltuch, ein Metallsieb oder ein Metallgitter ist.

6. Dieselrußfilter (10) umfassend ein Metallgehäuse (12), ein einstückiges massives Keramikelement (18), welches in dem Gehäuse (12) angeordnet ist, und eine flexible Befestigungseinrichtung (20), welche zwischen dem Keramikelement (18) und dem Metallgehäuse (12) angeordnet ist, um das Keramikelement (18) zu positionieren, und um mechanische Stöße und Wärmestöße zu absorbieren, wobei die flexible Befestigungseinrichtung (20) eine Mischung aus einem sich aufblähenden Material (21) umfaßt, welches um ein elastisches Verstärkungsmaterial (22) ausgebildet ist, wobei der Dieselrußfilter (10) dadurch gekennzeichnet ist, daß die Mischung aus sich aufblähendem Material einen Kompressionsmodul von mehr als 20 kPa und weniger als 500 kPa in dem Temperaturbereich von -40 ° C bis 750 ° C besitzt.

7. Dieselrußfilter (10) nach Anspruch 6, dadurch gekennzeichnet, daß die flexible Befestigungseinrichtung (20) 40 bis 65 Gew.-% nichtexpandierten Vermikulit, 25 bis 50 Gew.-% anorganisches Fasermaterial und 5 bis 15 % Bindemittel enthält.

8. Dieselrußfilter (10) nach Anspruch 7, dadurch gekennzeichnet, daß der Vermikulit einem Ionenaustausch mit einer Ammoniumverbindung unterzogen wurde, und daß das anorganische Fasermaterial (20) Asbest, Weichglasfaser, Aluminiumoxidwhisker, Aluminiumoxid-Siliziumdioxid-Faser oder Zirkoniumdioxid-Siliziumdioxid-Faser ist.

9. Dieselrußfilter (10) nach Anspruch 7, dadurch gekennzeichnet, daß das Bindemittel ein organisches oder anorganisches Material oder Kombinationen derselben ist.

10. Dieselrußfilter (10) nach Anspruch 6, dadurch gekennzeichnet, daß das elastische Verstärkungsmaterial (22) eine Metalltafel, ein Metalltuch, ein Metallsieb oder ein Metallgitter ist.

FIG. 1

FIG. 2

FIG.3

FIG. 4

EP 0 319 299 B1